# EUROPÄISCHE PATENTSCHRIFT

(11) **EP 3 203 814 B1**
(45) Veröffentlichungstag und Bekanntmachung des Hinweises auf die Patenterteilung: **19.08.2020**
(21) Anmeldenummer: 17153448.0
(22) Anmeldetag: 27.01.2017
(51) Int. Cl.: H05B 47/10

(54) **LICHTBANDSYSTEM MIT MEHREREN ANSTEUERBAREN LICHTBANDMODULEN**
LIGHT STRIP SYSTEM WITH MULTIPLE CONTROLLABLE LIGHT STRIP MODULES
SYSTÈME DE RUBAN LUMINEUX COMPRENANT PLUSIEURS MODULES DE RUBAN LUMINEUX POUVANT ÊTRE COMMANDÉS

(30) Priorität: 05.02.2016 DE 202016100586 U
(43) Veröffentlichungstag der Anmeldung: 09.08.2017
(73) Patentinhaber: Zumtobel Lighting GmbH, 6850 Dornbirn (AT)
(72) Erfinder: Mayr, Gregor, 6974 Gaißau (AT)
(74) Vertreter: Kiwit, Benedikt

(56) Entgegenhaltungen:
- US-A- 5 945 789
- US-A1- 2007 262 724
- US-A1- 2012 306 377
- US-A1- 2014 167 620

## Beschreibung

### 1. Gebiet der Erfindung

Die vorliegende Erfindung betrifft ein Lichtbandsystem mit mehreren ansteuerbaren Lichtbandmodulen, die seriell miteinander verbunden sind und ein Lichtband bilden.

### 2. Hintergrund

Im Stand der Technik sind Lichtbandsysteme bekannt, die Lichtbänder umfassen, die jeweils mehrere meist längliche, hintereinander angeordnete und miteinander elektrisch und/oder mechanisch gekoppelte Lichtbandmodule umfassen.

US 2012/306377 A1 offenbart eine LED-Lampe, die auf einem Beleuchtungskörper montiert ist, mit einer Vielzahl von LED-Chips.

Die einzelnen Lichtbandmodule weisen typischerweise jeweils ein Betriebsgerät auf und sind über dieses ansteuerbar, üblicherweise über eine zentrale Steuereinheit (beispielsweise eine zentrale Lichtsteueranlage). Zur eindeutigen Zuordnung und korrekten Ansteuerung der einzelnen Lichtbandmodule müssen diesen bei Inbetriebnahme des Lichtbandsystems eindeutige Moduladressen bzw. Leuchten-Adressen zugeordnet werden, mit Hilfe derer die Lichtsteueranlage die jeweiligen Lichtbandmodule später ansteuern kann. Typischerweise werden die Lichtbandmodule derartiger Lichtbandsysteme zunächst montiert und in einem nachfolgend Schritt an die elektrische Versorgung und an ein entsprechendes Bus-System (beispielsweise an ein sogenanntes DALI-System ("Digital Addressable Lightning Interface")) angeschlossen. Die Inbetriebnahme derartiger Lichtbandsysteme ist daher ein aufwendiger und kostenintensiver Prozess.

Darüber hinaus ist bei den bekannten Lichtbandsystemen eine Steuerung der Lichtabgabe durch die einzelnen Lichtbandmodule in Abhängigkeit des Tageslichtverlaufs vergleichsweise aufwendig gelöst. Üblicherweise wird hierfür eine Tageslichtmesseinheit an einer geeigneten Außenposition (meist am Gebäudedach) angeordnet, um den Tageslichtverlauf zu erfassen. Ferner wird für jeden Raum ein sogenannter Tageslichtkoeffizient ermittelt, so dass den jeweiligen Lichtbandmodulen ein korrespondierender Lichtabgabewert zugeordnet werden kann. Neben dem Nachteil, dass eine derartige Anpassung bzw. Einrichtung der einzelnen Lichtbandmodule nur von speziell hierfür ausgebildeten Personen durchgeführt werden kann, besteht der Nachteil, dass ein solches Lichtbandsystem statisch eingerichtet ist, d.h. eine flexible Anpassung der Lichtabgabe in Abhängigkeit der tatsächlichen Beleuchtungssituation ist nicht bzw. nur sehr umständlich möglich. Ferner ist es bekannt, Lichtbandsysteme mit einem sogenannten Anwesenheitssensor oder Bewegungssensor auszustatten, um zu erfassen, ob sich eine Person im Bereich des Lichtbandsystems befindet, so dass dieses eingeschaltet werden kann.

Ausgehend von diesem Stand der Technik stellt sich die vorliegende Erfindung die Aufgabe, ein Lichtbandsystem bereitzustellen, mit dem die oben genannten Nachteile vermieden bzw. reduziert werden können. Insbesondere soll ein Lichtbandsystem bereitgestellt werden, durch das eine möglichst automatisierte Adressierung der Lichtbandmodule eines Lichtbands erfolgen kann, eine effizientere und flexiblere Anpassung der Lichtabgabe der einzelnen Lichtbandmodule an den jeweiligen Tageslichtverlauf ermöglicht wird und eine möglichst auf eine Person bezogene und somit wesentlich energieeffizientere Anwesenheitssteuerung ermöglicht wird.

Diese und andere Aufgabe, die beim Lesen der folgenden Beschreibung nach genannt werden oder vom Fachmann erkannt werden können, werden durch einen Gegenstand der unabhängigen Ansprüche gelöst. Die abhängigen Ansprüche bilden dabei den zentralen Gedanken der vorliegenden Erfindung in besonders vorteilhafter Weise weiter.

### 3. Ausführliche Beschreibung der Erfindung

Die Erfindung offenbart ein Lichtbandsystem gemäß Anspruch 1.

Mit anderen Worten schlägt die vorliegende Erfindung vor, zwei Sensoreinheiten in einem Lichtband anzuordnen, wobei diese vorzugsweise an den Endbereichen des Lichtbands angeordnet sind, insbesondere in den Einspeise- und Ausspeisemodulen des Lichtbands, um an einer ersten Position des Lichtbands und an einer zweiten Position des Lichtbands entsprechende (Mess-)Parameter (beispielsweise Tageslichtparameter, Anwesenheitsparameter, Temperaturparameter, Feuchtigkeitsparameter, etc.) zu erfassen und basierend auf diesen erfassten Parametern, (Steuer-)Werte für eine individuelle Ansteuerung der zwischen den Sensoreinheiten angeordneten Lichtbandmodulen zu ermitteln bzw. zu berechnen, um diese Lichtbandmodule gemäß der ermittelten Werte individuell ansteuern zu können. Dadurch besteht die Möglichkeit, die jeweiligen Lichtbandmodule individuell an die tatsächliche Beleuchtungssituation bzw. an die tatsächlichen Beleuchtungsanforderungen anzupassen, so dass eine im Vergleich zum Stand der Technik wesentlich flexiblere und energieeffizientere Nutzung eines Lichtbandsystems möglich ist. Unter einem Lichtband im Sinne der vorliegenden Erfindung ist dabei eine serielle Anordnung der einzelnen Lichtbandmodule zu verstehen. Zwar bevorzugt allerdings nicht notwendig ist, dass die einzelnen Lichtbandmodule hierfür mechanisch miteinander verbunden sind oder in einem gemeinsamen Leuchtengehäuse angeordnet sind.

Vorzugsweise sind die Sensoreinheiten an den Endbereichen des Lichtbands angeordnet, insbesondere in den Einspeise- und Ausspeisemodulen des Lichtbands, wobei die zumindest eine Verarbeitungs- und Steuereinheit an einer der Sensoreinheit angeordnet oder in diese integriert ist. Durch die Integration einer Sensoreinheit mit der zumindest eine Verarbeitungs- und Steuereinheit kann ein sogenanntes Master-Modul bereitgestellt werden, in dem nicht nur die entsprechenden Sensormittel, sondern auch Mittel zur Verarbeitung der erfassten Parameter und Mittel zur Steuerung der einzelnen Lichtbandmodule angeordnet sind.

Die Anordnung an den Einspeise- und Ausspeisemodulen des Lichtbands ist dabei besonders bevorzugt, da dadurch eine einfache Möglichkeit bereitgestellt werden kann, auch den Energieverbrauch des Lichtbands zu ermitteln. Diesbezüglich ist es besonders bevorzugt, dass zumindest in einer der Sensoreinheiten oder in der Verarbeitungs- und Steuereinheit Verbrauchserfassungsmittel vorgesehen sind, um den Energieverbrauch des Lichtbands zu erfassen.

Vorteilhafterweise ist die Verarbeitungs- und Steuereinheit eingerichtet, um die Anzahl der zwischen den Sensoreinheiten angeordneten Lichtbandmodule zu erfassen und den jeweiligen Lichtbandmodulen eine Moduladresse zur Ansteuerung durch die Verarbeitungs- und Steuereinheit zuzuordnen. Dabei ist es ganz besonders bevorzugt, dass die Verarbeitungs- und Steuereinheit (bzw. das Master-Modul) an einem Endbereich des Lichtbands angeordnet ist, so dass den jeweiligen Lichtbandmodulen eine Moduladresse durch eine automatische Weiteradressierung der seriell aneinander angeschlossenen Lichtbandmodule zugeordnet werden kann. Beispielsweise kann das benachbart zum Master-Module angeordnete Lichtbandmodul mit #1 adressiert werden, das benachbart zum Lichtbandmodul #1 angeordnete Lichtbandmodul mit #2 adressiert werden usw. bis alle Lichtbandmodule, die zwischen der ersten und der zweiten Sensoreinheit angeordnet sind, entsprechend weiteradressiert wurden. Mit anderen Worten ist es bevorzugt, dass die Verarbeitungs- und Steuereinheit bzw. das Master-Modul ein Signal an die jeweiligen Betriebsgeräte der seriell angeordneten Lichtbandmodule sendet, so dass dadurch einerseits die Anzahl der angeschlossenen Lichtbandmodule automatisch ermittelt werden kann und zudem die jeweiligen Lichtbandmodule adressiert bzw. weiteradressiert werden können.

Vorteilhafterweise umfasst zumindest eine der Sensoreinheiten und/oder die zumindest eine Verarbeitungs- und Steuereinheit zumindest eine Schnittstelle zur drahtlosen Kommunikation, beispielsweise ein WLAN-Modul. Durch eine solche Schnittstelle können Daten mit dem Lichtband (beispielsweise mittels einer App oder einem Tablet) ausgetauscht werden, so dass beispielsweise der Status des Lichtbands, Energieverbrauchswerte oder Ansteuereinstellungen übermittelt und ausgetauscht werden können.

Ferner ist es bevorzugt, dass die Sensoreinheiten und die zumindest eine Verarbeitungs- und Steuereinheit mittels einer DALI-Verbindung ("Digital Addressable Lightning Interface") und/oder einer PLC-Verbindung ("Powerline Communication") miteinander verbunden sind. Dadurch können auf einfache Weise entsprechende Daten zwischen den Sensoreinheiten und der zumindest einen Verarbeitungs- und Steuereinheit bzw. dem Master-Modul ausgetauscht werden.

Vorzugsweise berechnet die Verarbeitungs- und Steuereinheit die Werte für die individuelle Ansteuerung der zumindest zwischen den Sensoreinheiten angeordneten Lichtbandmodule mittels einer Interpolation, vorzugsweise einer linearen Interpolation. Beispielsweise kann anhand von erfassten Tageslichtparametern ein linearer Verlauf der Lichtabgabe (d.h. ein linearer Dimmverlauf) der Lichtbandmodule eingestellt werden. Möglich ist allerdings auch, dass die Verarbeitungs- und Steuereinheit die (Ansteuer-)Werte nicht berechnet werden, sondern hierfür vordefinierte Werte in der Verarbeitungs-und Steuereinheit hinterlegt werden.

Vorteilhafterweise sind in der Verarbeitungs- und Steuereinheit die jeweiligen Längen der einzelnen adressierten Lichtbandmodule hinterlegt, so dass diese Längen bei der Ermittlung der Werte zu individuellen Ansteuerungen der jeweiligen Lichtbandmodule berücksichtigt werden können. Diesbezüglich ist es möglich, die Längen der Lichtbandmodule manuell einzugeben oder die Längen der Lichtbandmodule aus den Betriebsgeräten auszulesen, soweit diese dort hinterlegt sind.

Wie bereits ausgeführt, umfassen die Sensoreinheiten vorzugsweise jeweils zumindest einen Tageslichtsensor, um das jeweils auf diese treffende Tageslicht bzw. den entsprechenden Tageslichtanteil zu erfassen, so dass die Verarbeitungs- und Steuereinheit basierend auf den erfassten Tageslichtwerten individuelle Tageslichtparameter für das jeweilige Lichtbandmodule ermitteln und in den jeweiligen Lichtbandmodulen hinterlegen bzw. diese bei der Ansteuerung eines Lichtbandmoduls berücksichtigen kann. Dadurch besteht die Möglichkeit eine Ansteuerung der Lichtbandmodule entsprechend der tatsächlichen Tageslichtbedingungen vornehmen zu können, wobei die Lichtabgabe entlang des Lichtbands vorzugsweise durch eine lineare Interpolation ermittelt wird. Somit besteht bei einem solchen Lichtbandsystem auch keine Notwendigkeit mehr, dass eine speziell hierfür ausgebildete Person durch separate Messungen jeweilige Tageslichtkoeffizienten für jeden Raum ermitteln und in die jeweiligen Lichtbandmodule einspeisen muss.

Ferner ist es bevorzugt, dass die Sensoreinheiten jeweils zumindest einen Anwesenheitssensor umfassen, um zu erfassen, ob sich im Erfassungsbereich zumindest eines Anwesenheitssensors eine Person befindet und/oder um die Entfernung einer Person zu einem der Anwesenheitssensoren zu erfassen. Wie bereits ausgeführt, werden bekannte Lichtbandsysteme bei Anwesenheit einer Person als Ganzes angesteuert, also auch in Bereichen mit hoher Lichtabgabe betrieben, in denen sich keine Personen aufhalten, was zu einem unnötig hohen Energieaufwand führt. Durch die Anordnung von zumindest zwei Anwesenheitssensoren besteht die Möglichkeit, ein jeweiliges Lichtband derart anzusteuern, dass nur in Bereichen, in denen Personen präsent sind, eine hohe Lichtabgabe bereitgestellt wird und die Lichtabgabe mit zunehmenden Abstand zur erfassten Person stufenweise oder linear abgeregelt wird. Als Anwesenheitssensoren werden dabei vorzugsweise Ultraschall- und/oder Infrarotsensoren eingesetzt.

Erfasst der Anwesenheitssensor einer der Sensoreinheiten eine Person, kann beispielsweise das Lichtbandmodul, das benachbart zu diesem Anwesenheitssensor angeordnet ist, mit einer Lichtabgabe von 100% (bezogen auf die maximale Standardlichtabgabe) gesteuert werden, wobei die Lichtbandmodule mit zunehmender Entfernung mit geringerer Lichtabgabe betrieben werden, bis beispielsweise am letzten Lichtbandmodul eine Lichtabgabe von nur 80% eingestellt wird. Geht die von einem Anwesenheitssensor erfasste Person nunmehr in Richtung der zweiten Sensoreinheit (d.h. in Richtung des zweiten Anwesenheitssensors) kann das Lichtbandmodul quasi mit einer umgekehrten Lichtabgabe betrieben werden, d.h. das Lichtbandmodul, das benachbart zur zweiten Sensoreinheit angeordnet ist, wird nunmehr mit einer Lichtabgabe von 100% betrieben, wohingegen das Lichtbandmodul, das benachbart zum ersten Anwesenheitssensor angeordnet ist, nunmehr mit einer Lichtabgabe von 80% betrieben wird. Ein solcher Dimmverlauf kann dabei, beispielsweise in Abhängigkeit der Länge des Lichtbands, fest in der Verarbeitungs- und Steuereinheit hinterlegt werden. Ferner besteht auch die Möglichkeit einen jeweiligen Dimmverlauf über ein Eingabemittel (beispielsweise ein am Lichtband vorgesehener Dip-Switch oder über eine App) manuell anzupassen. Besteht das Lichtbandsystem aus mehreren Lichtbändern, kann durch die jeweiligen Sensoreinheiten der weiteren Lichtbänder eine korrespondierende Ansteuerung der Lichtbandmodule erfolgen, so dass eine Ansteuerung bereitgestellt werden kann, bei der die maximale Lichtabgabe einer sich bewegenden Person "folgt".

Die Präsenzsteuerung wird dabei vorzugsweise mit den erfassten Parametern der Tageslichtsensoren gekoppelt, so dass bei der Präsenzsteuerung die Lichtabgabe in den Bereichen entsprechend reduziert werden kann, wenn in diesen Bereichen ausreichend Tageslicht gegeben ist.

Vorzugsweise umfassen die Sensoreinheiten weitere Sensoren, beispielsweise Temperatursensoren, Feuchtigkeitssensoren, etc. Durch die Anordnung weiterer Sensoren besteht die Möglichkeit, ein erfindungsgemäßes Lichtbandsystem mehr oder weniger beliebig flexible ansteuern bzw. mehr oder weniger beliebige Beleuchtungsanforderungen erfüllen zu können.

Vorteilhafterweise ist zwischen der ersten Sensoreinheit und der zweiten Sensoreinheit zumindest eine weitere Sensoreinheit angeordnet. Eine derartige weitere Sensoreinheit wird besonders bevorzugt im mittleren Bereich des Lichtbands vorgesehen werden, um die jeweiligen Parameter zur Steuerung der Lichtbandmodule mit einer höheren Erfassungsdichte bereitstellen zu können, um dadurch einen besser an die jeweilige Situation angepassten Beleuchtungsverlauf bereitstellen zu können. Im Wesentlichen kann jedem Lichtbandmodul eine entsprechende Sensoreinheit zugeordnet werden bzw. in ein Lichtbandmodul integriert werden.

Ferner besteht die Möglichkeit, in der weiteren Sensoreinheit nur bestimmte Sensoren vorzusehen (beispielsweise lediglich einen Präsenzsensor), um die Ansteuerung des Lichtbands nur hinsichtlich dieser Beleuchtungssituation zu verbessern.

Vorteilhafterweise sind die Lichtbandmodule des Lichtbands in einem durchgehenden Lichtbandgehäuse angeordnet, so dass die jeweiligen Lichtbandmodule, die Sensoreinheiten und die zumindest eine Verarbeitungs-und Steuereinheit für einen Betrachter nicht erkennbar sind. Dabei ist es besonders bevorzugt, dass die Sensoreinheiten und die Verarbeitungs- und Steuereinheit in einer Tragschiene des Lichtbandsystems angeordnet sind, vorzugsweise an den Einspeise- und Ausspeisemodulen des Lichtbands.

Vorteilhafterweise umfasst das Lichtbandsystem zumindest zwei separate Lichtbänder, die jeweils mit einer zentralen Steuereinheit verbunden sind, wobei den Lichtbändern jeweils eine Lichtbandadresse zur Ansteuerung durch die zentrale Steuereinheit zugeordnet ist. Somit muss die zentrale Steuereinheit nicht mehr die einzelnen Lichtbandmodule ansteuern, sondern nur noch ein jeweiliges Lichtband als Einheit, da eine jeweilige Ansteuerung der einzelnen Lichtbandmodule durch die jeweiligen Verarbeitungs- und Steuereinheiten bereitgestellt werden kann. Dadurch kann ein Lichtbandsystem mit mehreren Lichtbändern auf einfache Weise adressiert werden, da nicht mehr die einzelnen Lichtbandmodule manuell mit einer Moduladresse versehen und diese in der zentralen Steuereinheit hinterlegt werden müssen, sondern nur noch die jeweiligen Lichtbänder als Einheit adressiert und nur diese Lichtbandadressen in der zentralen Steuereinheit hinterlegt werden müssen, da eine Adressierung der jeweiligen Leuchtbandmodule eines Lichtbands automatisch durch die Verarbeitungs- und Steuereinheit erfolgen kann.

Ein erfindungsgemäßes Lichtbandsystem ist vorzugsweise eingerichtet, um folgende Verfahrensschritte durchzuführen:
- Erfassen zumindest eines Parameters durch die jeweilige Sensoreinheit des Lichtbands;
- Übermitteln der erfassten Parameter an die Verarbeitungs- und Steuereinheit des Lichtbands (insbesondere an das Master-Modul);
- Ermitteln individueller Werte zur Ansteuerung der jeweiligen Lichtbandmodule basierend auf den erfassten und übermittelten Parametern; und
- individuelles Ansteuern der Lichtbandmodule gemäß der ermittelten Werte.

### 4. Beschreibung einer bevorzugten Ausführungsform

Nachfolgend wird eine detaillierte Beschreibung der Figuren gegeben. Darin zeigt:
- **Figur 1**: eine schematische Ansicht eines Lichtbands;
- **Figur 2**: eine schematische zur Steuerung des Lichtbands in Abhängigkeit des Tageslichts;
- **Figur 3**: eine schematische Ansicht einer Steuerung des Lichtbands in Abhängigkeit einer erfassten Person, die sich unterhalb des Lichtbands bewegt; und
- **Figur 4**: eine schematische Ansicht einer Steuerung des Lichtbands in Abhängigkeit einer erfassten Person, die sich im Bereich des Lichtbands bewegt, wobei in dem gezeigten Lichtband eine weitere Sensoreinheit vorgesehen ist.

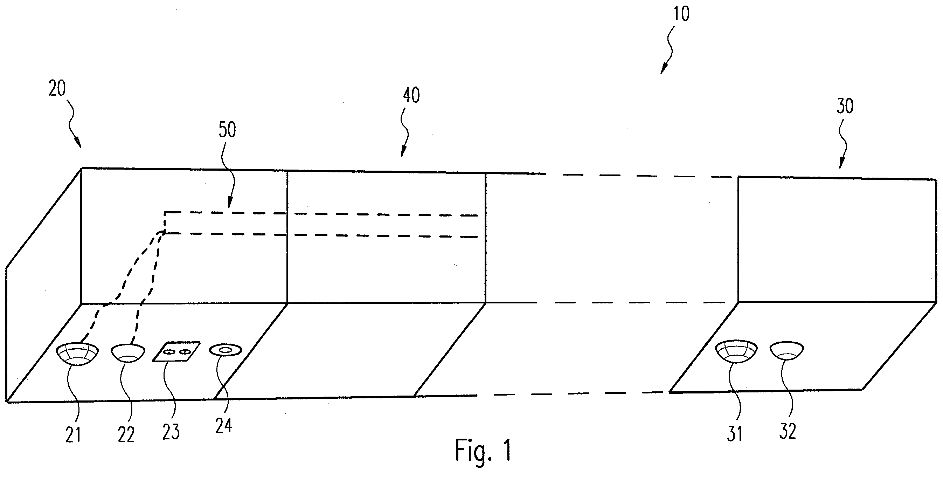

Figur 1 zeigt eine schematische Ansicht eines Lichtbands 10, das eine erste Sensoreinheit 20 und eine zweite Sensoreinheit 30 umfasst, wobei zwischen den Sensoreinheiten 20, 30 Lichtbandmodule 40 angeordnet sind.

Wie in Figur 1 gezeigt, ist es besonders bevorzugt, dass die Steuereinheiten 20, 30 an den jeweiligen Endbereichen des Lichtbands 10 angeordnet sind, wobei diese besonders bevorzugt an den Einspeise- und Ausspeisemodulen (nicht gezeigt) des Lichtbands 10 angeordnet sind.

Die Sensoreinheiten 20, 30 umfassen jeweils einen Anwesenheitssensor 21, 31, um zu erfassen, ob sich im Erfassungsbereich des jeweiligen Anwesenheitssensors 21, 31 eine Person befindet und/oder um die Entfernung einer Person zu einem der Anwesenheitssensoren 21, 31 zu erfassen. Darüber hinaus umfassen die Sensoreinheiten 20, 30 jeweils einen Tageslichtsensor 22, 32, um das jeweils auf diesen treffende Tageslicht zu erfassen.

In der gezeigten bevorzugten Ausführungsform, umfasst die Sensoreinheit 20 weiterhin einen (optionalen) mechanischen Adressschalter 23, mit der eine Lichtbandadresse des Lichtbands 10 manuell eingestellt werden kann. Ferner kann an dieser Position eine (optionale) Stromverbrauchsmessung vorgenommen werden, beispielsweise über entsprechende Anschlüsse. Darüber hinaus umfasst die Sensoreinheit 20 eine (optionale) Schnittstelle zur drahtlosen Kommunikation 24, um beispielsweise Daten (beispielsweise der Status des Lichtbands, Energieverbrauchswerte oder Ansteuereinstellungen) mit einem Tablet oder einem Smartphone austauschen zu können.

In der gezeigten bevorzugten Ausführungsform wird die Sensoreinheit 30 als sogenanntes Master-Modul 30 betrieben, d.h. in der Sensoreinheit 30 ist eine Verarbeitungs- und Steuereinheit zur Verarbeitung der durch die Sensoren aufgenommenen Parameter und zur Ansteuerung der jeweiligen Lichtbandmodulen 40 vorgesehen.

Die Sensoreinheiten 20, 30, die Verarbeitungs- und Steuereinheit und die Lichtbandmodule 40 (genauer deren Betriebsgeräte) sind vorzugsweise mittels einer internen Verdrahtung 50, vorzugsweise eine interne DALI-Verdrahtung miteinander verbunden, so dass ein entsprechender Datenaustausch (d.h. zumindest ein Austausch der erfassten Parameter und der Steuersignale) zwischen den Sensoreinheiten 20, 30, der Verarbeitungs- und Steuereinheit und den jeweiligen Lichtbandmodulen 40 erfolgen kann.

Durch die Verarbeitungs- und Steuereinheit bzw. durch das Master-Modul 30 kann nunmehr eine Adressierung der jeweiligen Lichtbandmodule 40 derart vorgenommen werden, dass eine Verbindung mit den jeweiligen Betriebsgeräten der Lichtbandmodule 40 hergestellt wird und die jeweiligen Lichtbandmodule 40 ausgehend vom Master-Modul 30 automatisch fortlaufend (weiter-)adressiert werden. Beispielsweise kann das Lichtbandmodul 40, das benachbart zum Master-Modul 30 vorliegt mit der Adresse #1 versehen werden, das zu diesem benachbarten Lichtbandmodul 40 mit der Adresse #2, usw. bis das Ende des Lichtbands 10 erreicht ist. Somit können mit Inbetriebnahme des Lichtbands 10 alle jeweiligen Lichtbandmodule 40 automatisch mit einer entsprechenden Moduladresse versehen werden, so dass diese durch die Verarbeitungs- und Steuereinheit bzw. durch das Master-Modul 30 entsprechend ansteuerbar sind.

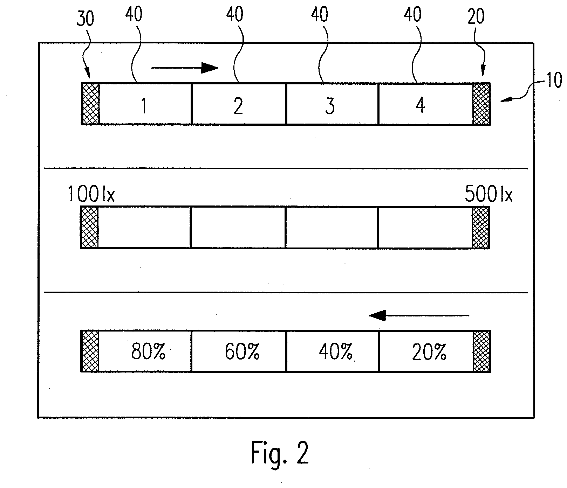

Figur 2 zeigt eine schematische Ansicht des Lichtbands 10 mit einer Ansteuerung basierend auf den erfassten Tageslichtparametern (obere Abbildung). Das in Figur 2 gezeigte Lichtband 10 umfasst dabei beispielsweise vier Lichtbandmodule 40, die vom Master-Modul 30 entsprechend adressiert wurden und entsprechend von diesem angesteuert werden können.

Wie in Figur 2 gezeigt (mittlere Abbildung) wird am Master-Modul 30 ein Lichtwert von 100 Lux erfasst, wohingegen an der Sensoreinheit 20 ein Wert von 500 Lux erfasst wird. Diese Parameter werden nunmehr an die Verarbeitungs- und Steuereinheit, also an das Master-Modul 30 übermittelt, so dass dieses basierend auf den erfassten Parametern Werte für eine individuelle Ansteuerung der Lichtbandmodule 40 ermitteln bzw. berechnen kann. Anschließend erfolgt eine entsprechende Ansteuerung der jeweiligen Lichtbandmodule 40 durch die Verarbeitungs- und Steuereinheit, wobei in dem gezeigten Beispiel eine Ansteuerung der Lichtbandmodule 40 derart erfolgt, dass das erste Lichtbandmodul 40 (#1) mit 80% Lichtabgabe (bezogen auf die maximale Standardlichtabgabe) betrieben wird und die Lichtabgabe linear bis zum anderen Ende des Lichtbands 10 um jeweils 20% abnimmt, bis zu einem Wert von 20% Lichtabgabe, die am letzten Lichtbandmodul 40 (#4) eingestellt wird. Mit anderen Worten kann die Verarbeitungs- und Steuereinheit bzw. das Master-Modul 30 auf Basis der zwei Messungen und der Anzahl der Lichtbandmodule 40 einen Dimmverlauf ermitteln und weist jedem Lichtbandmodul 40 bzw. jeder Moduladresse einen entsprechenden Tageslichtkoeffizienten zu, der vorzugsweise in den Betriebsgeräten der jeweiligen Lichtbandmodule 40 abgespeichert wird.

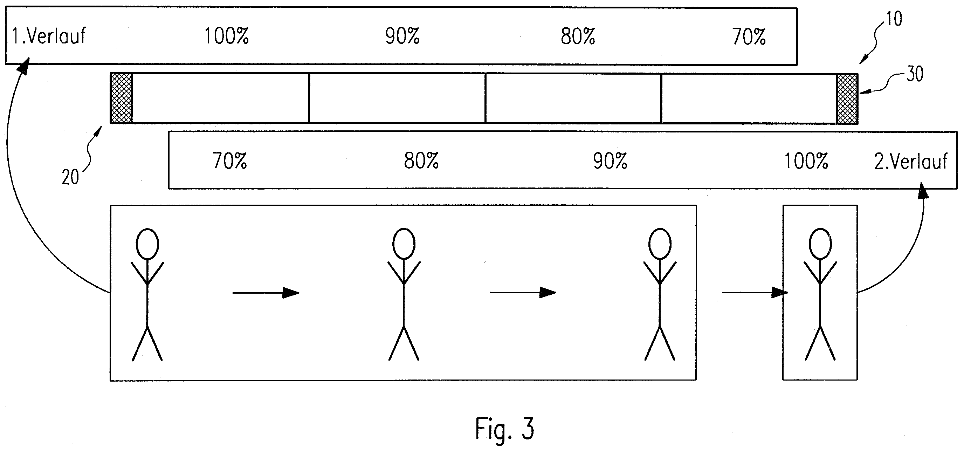

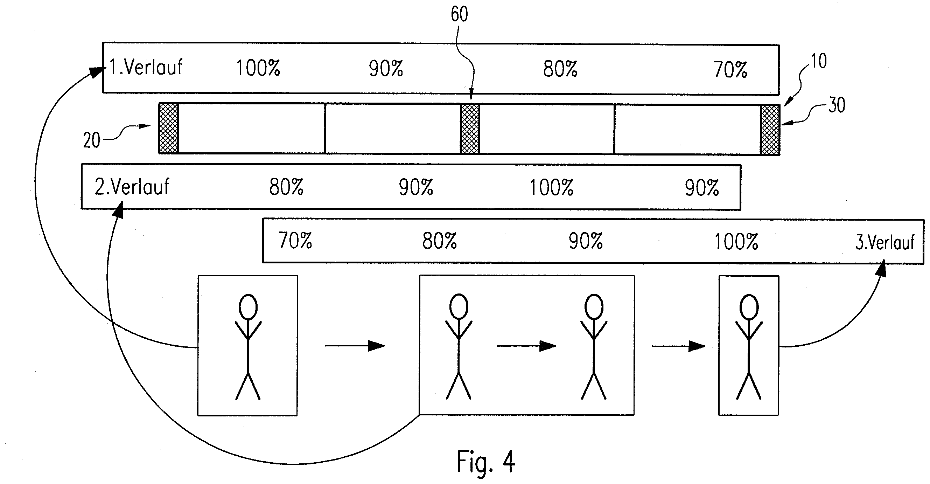

Figur 3 zeigt eine schematische Ansicht einer Ansteuerung eines Lichtbands 10, für den Fall, dass einer der Anwesenheitssensoren 21, 31 die Anwesenheit einer Person erfasst. Wie in Figur 3 dargestellt kann das Lichtband 10 derart die Lichtbandmodule 40 steuern, dass bei einer Erfassung einer Person bei einem der Anwesenheitssensoren 21, 31 zunächst eine abfallende Lichtabgabe (Dimmung) ausgehend von der ersten Sensoreinheit 20 eingestellt wird (vergleiche 1. Verlauf in Figur 3). Bewegt sich die Person nunmehr in den Erfassungsbereich des anderen Anwesenheitssensors 31, wird ein zweiter Verlauf der Lichtabgabe eingestellt (vergleiche 2. Verlauf in Figur 3). Mit einer derartigen Anordnung besteht somit die Möglichkeit, dass die maximale Lichtabgabe einer sich bewegenden Person "folgt". Figur 4 zeigt eine schematische Ansicht einer Ansteuerung eines Lichtbands 10, für den Fall, dass einer der Anwesenheitssensoren 21, 31 die Anwesenheit einer Person erfasst, wobei im Unterschied zu der in Figur 3 gezeigten Ansteuerung eine Ansteuerung mittels einer zusätzlichen Sensoreinheit 60 erfolgt, die zumindest einen weiteren Anwesenheitssensor umfasst. Dadurch kann die Lichtabgabe durch die Lichtbandmodule 40 genauer auf die Bewegung der Person eingestellt werden. Wie in Figur 4 gezeigt, wird ein erster Verlauf der Lichtabgabe eingestellt, sobald sich eine Person im Erfassungsbereich des ersten Anwesenheitssensors 21 befindet, ein zweiter Verlauf der Lichtabgabe wird dann eingestellt, sobald sich die Person im Erfassungsbereich des weiteren Anwesenheitssensors der zusätzlichen Sensoreinheit 60 befindet und ein dritter Verlauf der Lichtabgabe wird eingestellt, sobald sich die Person im Erfassungsbereich des Anwesenheitssensors 31 der zweiten Sensoreinheit 30 befindet.

Die angegebenen Werte für die Lichtabgabe für die verschiedenen Verläufe sind dabei lediglich beispielhaft und können im Master-Modul 30 fest hinterlegt werden bzw. über Eingabemittel (beispielsweise einen Dip-Switch oder über eine drahtlose Kommunikation, beispielsweise über ein Smartphone oder Tablet) geändert werden. Ferner besteht die Möglichkeit am Master-Modul 30 (d.h. vorzugsweise am Einspeisemodul) einen Überspannungsschutz für das gesamte Lichtband 10 bereitzustellen. Wie oben bereits ausgeführt, besteht die Möglichkeit, dass an einer der Sensoreinheiten 20, 30 ferner Verbrauchserfassungsmittel vorgesehen sind, um den Energieverbrauch des Lichtbands 10 zu erfassen.

Die vorliegende Erfindung ist nicht auf das vorhergehend gezeigte Ausführungsbeispiel eines erfindungsgemäßen Lichtbandsystems beschränkt, solange sie vom Gegenstand der folgenden Ansprüche umfasst sind. Insbesondere ist die vorliegende Erfindung nicht auf den Einsatz einer bestimmten Art von Sensoren beschränkt. Darüber hinaus ist die vorliegende Erfindung nicht darauf beschränkt, dass die Sensoreinheiten bzw. die Verarbeitungs- und Steuereinheit oder das Master-Modul an den Endbereichen des Lichtbands 10 angeordnet wird.

## Patentansprüche

1. Lichtbandsystem, umfassend:
- mehrere ansteuerbare Lichtbandmodule (40), die seriell miteinander verbunden sind, um ein Lichtband (10) zu bilden;
- zumindest eine erste Sensoreinheit (20), die an einer ersten Position des Lichtbands (10) angeordnet ist und eine zweite Sensoreinheit (30), die an einer zweiten Position des Lichtbands (10) angeordnet ist, **dadurch gekennzeichnet, dass** zwischen den Sensoreinheiten (20, 30) zumindest zwei ansteuerbare Lichtbandmodule (40) angeordnet sind;
- zumindest eine Verarbeitungs- und Steuereinheit, die mit den Sensoreinheiten (20, 30) derart verbunden ist, dass zumindest ein durch die Sensoreinheiten (20, 30) jeweils erfasster Parameter an die Verarbeitungs- und Steuereinheit übermittelbar ist, und wobei die Verarbeitungs- und Steuereinheit zumindest mit den zwischen den Sensoreinheiten (20, 30) angeordneten Lichtbandmodulen (40) verbunden ist, um diese anzusteuern;
- wobei die zumindest eine Verarbeitungs- und Steuereinheit basierend auf den durch die Sensoreinheiten (20, 30) erfassten Parametern Werte für eine individuelle Ansteuerung zumindest der zwischen den Sensoreinheiten (20, 30) angeordneten Lichtbandmodulen (40) ermittelt und zumindest diese Lichtbandmodule (40) gemäß der ermittelten Werte individuell ansteuert,
- wobei die zumindest eine Verarbeitungs- und Steuereinheit an einer der Sensoreinheiten (20, 30) angeordnet oder in diese integriert ist und ein Master-Modul (30) bildet.

2. Lichtbandsystem nach Anspruch 1, wobei die Sensoreinheiten (20, 30) an den Endbereichen des Lichtbands (10) angeordnet sind, insbesondere an/in den Einspeise- und Ausspeisemodulen des Lichtbands (10).

3. Lichtbandsystem nach Anspruch 1 oder 2, wobei die Verarbeitungs- und Steuereinheit eingerichtet ist, um die Anzahl der zwischen den Sensoreinheiten (20, 30) angeordneten Lichtbandmodule (40) zu erfassen und den jeweiligen Lichtbandmodulen (40) eine Moduleadresse zur Ansteuerung durch die Verarbeitungs- und Steuereinheit zuzuordnen.

4. Lichtbandsystem nach einem der vorhergehenden Ansprüche, wobei zumindest eine der Sensoreinheiten (20, 30) und/oder die zumindest eine Verarbeitungs-und Steuereinheit zumindest eine Schnittstelle zur drahtlosen Kommunikation (24) umfasst, und/oder
wobei die Sensoreinheiten (20, 30) und die zumindest eine Verarbeitungs- und Steuereinheit mittels einer DALI-Verbindung ("Digital Addressable Lighting Interface", 50) und/oder einer PLC-Verbindung ("Powerline Communication") miteinander verbunden sind.

5. Lichtbandsystem nach einem der vorhergehenden Ansprüche, wobei die Verarbeitungs- und Steuereinheit die Werte für die individuelle Ansteuerung zumindest der zwischen den Sensoreinheiten (20, 30) angeordneten Lichtbandmodulen (40) mittels einer linearen Interpolation ermittelt.

6. Lichtbandsystem nach einem der vorhergehenden Ansprüche, wobei in der Verarbeitungs- und Steuereinheit die jeweiligen Längen der einzelnen Lichtbandmodule (40) hinterlegt sind und diese bei der Ermittlung der Werte zur individuellen Ansteuerung der jeweiligen Lichtbandmodule (40) berücksichtigt werden.

7. Lichtbandsystem nach einem der vorhergehenden Ansprüche,
• wobei die Sensoreinheiten (20, 30) jeweils zumindest einen Tageslichtsensor (22, 32) umfassen, um das jeweils auf diesen treffende Tageslicht zu erfassen, so dass die Verarbeitungs- und Steuereinheit basierend auf den erfassten Tageslichtwerten individuelle Tageslichtparameter für das jeweilige Lichtbandmodul (40) ermitteln und im jeweiligen Lichtbandmodul (40) hinterlegen bzw. bei der Ansteuerung eines jeweiligen Lichtbandmoduls (40) berücksichtigen kann, und/oder
• wobei die Sensoreinheiten (20, 30) jeweils zumindest einen Anwesenheitssensor (21, 31) umfassen, um zu erfassen, ob sich im Erfassungsbereich zumindest eines Anwesenheitssensors (21, 31) eine Person befindet und/oder um die Entfernung einer Person zu einem der Anwesenheitssensoren (21, 31) zu erfassen,
∘ wobei die Anwesenheitssensoren (21, 31) vorzugsweise durch Ultraschall- und/oder Infrarotsensoren bereitgestellt sind, und/oder
∘ wobei die Verarbeitungs- und Steuereinheit vorzugsweise eingerichtet ist, um bei Erfassung einer Person, die jeweiligen Lichtbandmodule (40) derart anzusteuern, dass die Lichtabgabe der jeweiligen Lichtbandmodule (40) mit zunehmenden Abstand zur erfassten Person stufenweise oder linear abnimmt.

8. Lichtbandsystem nach einem der vorhergehenden Ansprüche, wobei die Sensoreinheiten (20, 30) jeweils zumindest einen Temperatursensor oder einen Feuchtigkeitssensor umfassen.

9. Lichtbandsystem nach Anspruch 7 oder 8, wobei die Verarbeitungs- und Steuereinheit eingerichtet ist, um die Werte zur individuellen Ansteuerung der jeweiligen Lichtbandmodule (40) zumindest basierend auf den erfassten Parametern der Tageslichtsensoren (22, 32) und der Anwesenheitssensoren (21, 31) zu ermitteln.

10. Lichtbandsystem nach einem der vorhergehenden Ansprüche, wobei zwischen der ersten Sensoreinheit (20) und der zweiten Sensoreinheit (30) zumindest eine weitere Sensoreinheit (60) angeordnet ist.

11. Lichtbandsystem nach einem der vorherigen Ansprüche, wobei zumindest eine der Sensoreinheiten (20, 30, 60) oder die Verarbeitungs- oder Steuereinheit Verbrauchserfassungsmittel umfasst, um den Energieverbrauch des Lichtbands (10) zu erfassen.

12. Lichtbandsystem nach einem der vorhergehenden Ansprüche, wobei die Lichtbandmodule (40) eines Lichtbands (10) in einem durchgehenden Lichtbandgehäuse angeordnet sind.

13. Lichtbandsystem nach einem der vorhergehenden Ansprüche, wobei das Lichtbandsystem zumindest zwei separate Lichtbänder (10) umfasst, die mit einer zentralen Steuereinheit verbunden sind, wobei den Lichtbändern (10) jeweils eine Lichtbandadresse zur Ansteuerung durch die zentrale Steuereinheit zugeordnet ist.

14. Lichtbandsystem nach einem der vorhergehenden Ansprüche, wobei das Lichtbandsystem zur Durchführung folgender Verfahrensschritte eingerichtet ist:
- Erfassen zumindest eines Parameters durch die jeweilige Sensoreinheit (20, 30) des Lichtbands (10);
- Übermitteln der erfassten Parameter an die Verarbeitungs- und Steuereinheit des Lichtbands (10);
- Ermitteln individueller Werte zur Ansteuerung der jeweiligen Lichtbandmodule (40) basierend auf den erfassten und übermittelten Parametern; und
- individuelles Ansteuern der Lichtbandmodule (40) gemäß der ermittelten Werte.

## Claims

1. Light strip system comprising:
- multiple controllable light strip modules (40) serially connected to each other to form a light strip (10);
- at least one first sensor unit (20) arranged at a first position on the light strip (10) and a second sensor unit (30) arranged at a second position on the light strip (10), **characterized in that** at least two controllable light strip modules (40) are arranged between the sensor units (20, 30);
- at least one processing and control unit which is connected to the sensor units (20, 30) in such a way that at least one parameter respectively detected by the sensor units (20, 30) can be transmitted to the processing and control unit, and wherein the processing and control unit is connected at least to the light strip modules (40) arranged between the sensor units (20, 30) in order to control them;
- wherein the at least one processing and control unit determines, on the basis of the parameters detected by the sensor units (20, 30), values for an individual control of at least the light strip modules (40) arranged between the sensor units (20, 30) and individually controls at least these light strip modules (40) according to the determined values,
- wherein the at least one processing and control unit is arranged on or integrated into one of the sensor units (20, 30) and forms a master module (30).

2. Light strip system according to Claim 1, wherein the sensor units (20, 30) are arranged at the end regions of the light strip (10), in particular on/in the feed and discharge modules of the light strip (10).

3. Light strip system according to Claim 1 or 2, wherein the processing and control unit is configured to detect the number of light strip modules (40) arranged between the sensor units (20, 30) and to assign the respective light strip modules (40) a module address for control by the processing and control unit.

4. Light strip system according to any one of the preceding claims, wherein at least one of the sensor units (20, 30) and/or the at least one processing and control unit comprises at least one interface for wireless communication (24), and/or
wherein the sensor units (20, 30) and the at least one processing and control unit are connected to each other by means of a DALI connection ("Digitally Addressable Lighting Interface," 50) and/or a PLC connection ("Powerline Communication").

5. Light strip system according to any one of the preceding claims, wherein the processing and control unit determines, by means of a linear interpolation, the values for the individual control of at least the light strip modules (40) arranged between the sensor units (20, 30).

6. Light strip system according to any one of the preceding claims, wherein the respective lengths of the individual light strip modules (40) are stored in the processing and control unit and are taken into account when the values for the individual control of the respective light strip modules (40) are determined.

7. Light strip system according to any one of the preceding claims,
• wherein the sensor units (20, 30) each comprise at least one daylight sensor (22, 32) in order to detect the daylight incident thereon in each case so that the processing and control unit can, on the basis of the detected daylight values, determine individual daylight parameters for the respective light strip module (40) and store them in the respective light strip module (40) or take them into account when controlling a respective light strip module (40), and/or
• wherein the sensor units (20, 30) each comprise at least one presence sensor (21, 31) in order to detect whether a person is in the detection area of at least one presence sensor (21, 31) and/or to detect the distance of a person from one of the presence sensors (21, 31),
∘ wherein the presence sensors (21, 31) are preferably provided by ultrasound and/or infrared sensors, and/or
∘ wherein the processing and control unit is preferably configured to control the respective light strip modules (40) in such a way when a person is detected that the light output of the respective light strip modules (40) decreases stepwise or linearly as the distance from the detected person increases.

8. Light strip system according to any one of the preceding claims, wherein the sensor units (20, 30) each comprise at least one temperature sensor or one humidity sensor.

9. Light strip system according to Claim 7 or 8, wherein the processing and control unit is configured to determine the values for the individual control of the respective light strip modules (40) at least on the basis of the detected parameters of the daylight sensors (22, 32) and of the presence sensors (21, 31).

10. Light strip system according to any one of the preceding claims, wherein at least one further sensor unit (60) is arranged between the first sensor unit (20) and the second sensor unit (30).

11. Light strip system according to any one of the previous claims, wherein at least one of the sensor units (20, 30, 60) or the processing or control unit comprises consumption detection means for detecting the energy consumption of the light strip (10).

12. Light strip system according to any one of the preceding claims, wherein the light strip modules (40) of a light strip (10) are arranged in a continuous light strip housing.

13. Light strip system according to any one of the preceding claims, wherein the light strip system comprises at least two separate light strips (10) which are connected to a central control unit, wherein the light strips (10) are each assigned a light strip address for control by the central control unit.

14. Light strip system according to any one of the preceding claims, wherein the light strip system is configured to perform the following method steps:
- detecting at least one parameter by means of the respective sensor unit (20, 30) of the light strip (10);
- transmitting the detected parameters to the processing and control unit of the light strip (10);
- determining individual values for controlling the respective light strip modules (40) on the basis of the detected and transmitted parameters; and
- individually controlling the light strip modules (40) according to the determined values.

## Revendications

1. Système de ruban lumineux, comprenant :
- plusieurs modules (40) de ruban lumineux pouvant être commandés, qui sont connectés en série entre eux, pour former un ruban lumineux (10) ;
- au moins une première unité de capteur (20) qui est agencée au niveau d'une première position du ruban lumineux (10) et une deuxième unité de capteur (30) qui est agencée au niveau d'une deuxième position du ruban lumineux (10), **caractérisé en ce qu'**au moins deux modules (40) de ruban lumineux pouvant être commandés sont agencés entre les unités de capteur (20, 30) ;
- au moins une unité de traitement et de commande, qui est connectée aux unités de capteur (20, 30) de telle sorte qu'au moins un paramètre respectif détecté par les unités de capteur (20, 30) puisse être transmis à l'unité de traitement et de commande et l'unité de traitement et de commande étant connectée au moins aux modules (40) de ruban lumineux agencés entre les unités de capteur (20, 30) pour les commander ;
- l'au moins une unité de traitement et de commande, sur la base des paramètres détectés par les unités de capteur (20, 30), déterminant des valeurs pour une commande individuelle d'au moins les modules (40) de ruban lumineux agencés entre les unités de capteur (20, 30) et commandant individuellement au moins ces modules (40) de ruban lumineux selon les valeurs déterminées,
- l'au moins une unité de traitement et de commande étant agencée au niveau d'une des unités de capteur (20, 30) ou étant intégrée dans celle-ci et formant un module maître (30).

2. Système de ruban lumineux selon la revendication 1, les unités de capteur (20, 30) étant agencées au niveau des zones d'extrémité du ruban lumineux (10), en particulier au niveau des/dans les modules d'entrée et de sortie du ruban lumineux (10).

3. Système de ruban lumineux selon la revendication 1 ou 2, l'unité de traitement et de commande étant conçue pour détecter le nombre de modules (40) de ruban lumineux agencés entre les unités de capteur (20, 30) et pour attribuer une adresse de module aux modules (40) de ruban lumineux respectifs pour la commande par l'unité de traitement et de commande.

4. Système de ruban lumineux selon l'une quelconque des revendications précédentes, au moins l'une des unités de capteur (20, 30) et/ou l'au moins une unité de traitement et de commande comprenant au moins une interface pour la communication sans fil (24) et/ou
les unités de capteur (20, 30) et ladite au moins une unité de traitement et de commande étant connectées les unes aux autres au moyen d'une connexion DALI (« Digital Addressable Lighting Interface », 50) et/ou d'une connexion PLC (« Powerline Communication »).

5. Système de ruban lumineux selon l'une quelconque des revendications précédentes, l'unité de traitement et de commande déterminant les valeurs pour la commande individuelle d'au moins les modules (40) de ruban lumineux agencés entre les unités de capteur (20, 30) au moyen d'une interpolation linéaire.

6. Système de ruban lumineux selon l'une quelconque des revendications précédentes, les longueurs respectives des différents modules (40) de ruban lumineux étant enregistrées dans l'unité de traitement et de commande et celles-ci étant prises en compte lors de la détermination des valeurs pour la commande individuelle des modules (40) de ruban lumineux respectifs.

7. Système de ruban lumineux selon l'une quelconque des revendications précédentes,
• les unités de capteur (20, 30) comprenant respectivement au moins un détecteur de lumière du jour (22, 32) pour détecter la lumière du jour tombant respectivement sur celui-ci, de telle sorte que l'unité de traitement et de commande puisse déterminer, sur la base des valeurs de lumière du jour détectées, des paramètres de lumière du jour individuels pour le module (40) de ruban lumineux respectif et puisse les enregistrer dans le module (40) de ruban lumineux respectif ou les prendre en compte lors de la commande d'un module (40) de ruban lumineux respectif et/ou
• les unités de capteur (20, 30) comprenant respectivement au moins un détecteur de présence (21, 31) pour déterminer si une personne se trouve dans la zone de détection d'au moins un détecteur de présence (21, 31) et/ou pour détecter la distance d'une personne par rapport à l'un des détecteurs de présence (21, 31),
∘ les détecteurs de présence (21, 31) étant de préférence réalisés par des détecteurs ultrasonores et/ou infrarouges et/ou
∘ l'unité de traitement et de commande étant de préférence conçue pour commander les modules (40) de ruban lumineux respectifs, lors de la détection d'une personne, de manière telle que l'émission de lumière des modules (40) de ruban lumineux respectifs diminue par paliers ou linéairement avec l'augmentation de la distance par rapport à la personne détectée.

8. Système de ruban lumineux selon l'une quelconque des revendications précédentes, les unités de capteur (20, 30) comprenant respectivement au moins un capteur de température ou un capteur d'humidité.

9. Système de ruban lumineux selon la revendication 7 ou 8, l'unité de traitement et de commande étant conçue pour déterminer les valeurs pour la commande individuelle des modules (40) de ruban lumineux respectifs au moins sur la base des paramètres détectés des détecteurs de lumière du jour (22, 32) et des détecteurs de présence (21, 31).

10. Système de ruban lumineux selon l'une quelconque des revendications précédentes, au moins une autre unité de capteur (60) étant agencée entre la première unité de capteur (20) et la deuxième unité de capteur (30).

11. Système de ruban lumineux selon l'une quelconque des revendications précédentes, au moins l'une des unités de capteur (20, 30, 60) ou l'unité de traitement ou de commande comprenant des moyens de détection de la consommation pour détecter la consommation d'énergie du ruban lumineux (10).

12. Système de ruban lumineux selon l'une quelconque des revendications précédentes, les modules (40) d'un ruban lumineux (10) étant agencés dans un boîtier continu de ruban lumineux.

13. Système de ruban lumineux selon l'une quelconque des revendications précédentes, le système de ruban lumineux comprenant au moins deux rubans lumineux (10) séparés qui sont connectés à une unité de commande centrale, une adresse de ruban lumineux étant à chaque fois attribuée aux rubans lumineux (10) pour la commande par l'unité de commande centrale.

14. Système de ruban lumineux selon l'une quelconque des revendications précédentes, le système de ruban lumineux étant conçu pour la réalisation des étapes de procédé suivantes :
- détection d'au moins un paramètre par l'unité de capteur (20, 30) respective du ruban lumineux (10) ;
- transmission du paramètre détecté à l'unité de traitement et de commande du ruban lumineux (10) ;
- détermination de valeurs individuelles pour la commande des modules (40) de ruban lumineux respectifs sur la base des paramètres détectés et transmis ; et
- commande individuelle des modules (40) de ruban lumineux selon les valeurs déterminées.
